# EUROPEAN PATENT SPECIFICATION

(11) **EP 3 190 474 B1**
(45) Date of publication and mention of the grant of the patent: **31.03.2021**
(21) Application number: 14901325.2
(22) Date of filing: 01.09.2014
(51) Int. Cl.: F27D 19/00, G06F 1/00, C21D 11/00, C21D 1/62

(54) **DEVICE FOR MONITORING FLOW RATE AND DISTRIBUTIONAL UNIFORMITY OF LIQUID IN MULTI-CHANNEL HYDRAULIC SYSTEM**
VORRICHTUNG ZUR ÜBERWACHUNG DER DURCHFLUSSRATE UND VERTEILUNGSUNIFORMITÄT EINER FLÜSSIGKEIT IN EINEM MEHRKANALIGEN HYDRAULIKSYSTEM
DISPOSITIF DE COMMANDE DE DÉBIT ET D'UNIFORMITÉ DE DISTRIBUTION D'UN LIQUIDE DANS UN SYSTÈME HYDRAULIQUE À CANAUX MULTIPLES

(43) Date of publication of application: 12.07.2017
(73) Proprietor: Scientific And Manufacturing Enterprise "Tomsk Electronic Company" Ltd., 634040 Tomsk (RU)
(72) Inventor: GROMYSHEV, Evgeny Valerievich, Tomsk 634012 (RU); KHLYST, Sergey Vasilievich, Tomsk 634041 (RU); KHLYST, Ilya Sergeevich, Tomsk 634041 (RU); KUZMICHENKO, Vladimir Mikhaylovich, Tomsk 634006 (RU); FAZATDINOV, Renad Ibragimovich, Tomsk 634057 (RU); IZOTOV, Oleg Petrovich, Tomsk 634063 (RU); SHESTAKOV, Andrey Nikolaevich, Tomsk 634045 (RU); IVANOV, Alexey Gennadievich, Tomsk 634040 (RU); KIRICHENKO, Mikhail Nikolaevich, Tomsk 634021 (RU); PSHENICHNIKOV, Pavel Alexandrovich, Tomsk 634040 (RU)
(74) Representative: Anohins, Vladimirs
(86) International application number: PCT/RU2014/000655
(87) International publication number: WO 2016/036268

(56) References cited:
- CN-A- 1 528 534
- CN-A- 1 528 534
- JP-A- H07 112 254
- JP-A- S62 174 319
- US-A- 4 932 232
- US-A- 4 932 232
- US-A1- 2005 011 281
- US-A1- 2010 024 505

## Description

### Field of Invention

The invention relates to apparatus for monitoring flow rate and distributional uniformity of liquid in a multi-channel hydraulic system, and may be used, for example, in metallurgical production for monitoring the flow rate and distributional uniformity of liquid fed onto surfaces of products/materials being cooled, such as rolled metal products, in particular a rail during thermal processing.

### Prior Art

It is known from patent CN1528534 (published on 15.09.2004) a multi-channel hydraulic system with jet presence sensors, which is used in production process of hot-rolled steel products. This system comprises a number of nozzles rigidly fixed on a liquid chamber. Each nozzle is associated with two spaced from each other electrodes directly or indirectly connected to a power supply source. The electrodes are disposed on a hydraulic outlet of a nozzle diametrically, i.e. in one cross-section of the jet. Electrically conducting liquid discharged from the nozzle closes a portion of a circuit between the electrodes, and current flows in the electrical circuit, which is indicated by light-emitting diodes. Elements of this device are powered by a direct current power supply.

Turning on/off of the light-emitting diodes shows presence/absence of liquid discharge from a nozzle, however, the measurement of its cross-section is not provided, which does not allow monitoring the distributional uniformity of liquid passing through the nozzles. Monitoring of volume flow of liquid entering the hydraulic system is absent. Furthermore, electrodes in a direct current circuit are subject to fast degradation due to electrolytic processes.

It is known from the patent US 4932232, published on 12.06.1990, an apparatus for monitoring flow rate and distributional uniformity of liquid in multi-channel hydraulic system. This apparatus is used in metallurgical production when cooling products, and comprises hydraulic outlets being arranged in a row on a liquid chamber, and more specifically, nozzles with pulsed liquid discharge ensured by electrically-operated hydraulic valves at hydraulic inlets of each nozzle. Liquid coolant is supplied to the liquid chamber from a pressure line. A volume flow sensor is installed in a bypass line and connected to a monitor unit which, in turn, is connected using control lines to the electrically-operated hydraulic valves. When monitoring the presence of jets from the hydraulic outlets, the pressure line is closed; liquid enters the liquid chamber through the bypass line. At that, to monitor the presence of the jet from the first hydraulic outlet, liquid supply to all the others hydraulic outlets using the respective electrically-operated hydraulic valves. In such case, readings of the volume flow sensor are taken equal to the amount of liquid being discharged from the first hydraulic outlet. Based on quantity of the said flow, an inference is made about presence of the jet from the hydraulic outlet, and so forth, for all the other hydraulic outlets.

Monitoring is carried out only in the diagnostic mode, and cannot be used when running the technological mode; therefore there is a possibility that deviations which occurred in the technological process may not be detected during the diagnosis. For example: during the technological process mechanical particles may clog/narrow down openings of hydraulic outlets or hydraulic valves for some time, followed by restoration of their flow capacity.

Availability of a hydraulic valve on each water supply line from the liquid chamber to the nozzles adversely affects the uniformity of liquid distribution because of different time parameters of operation of each hydraulic valve, including its opening/closing.

The result is that non-uniform discharge of liquid from the hydraulic outlets adversely affects the quality of a product being thermally processed.

In addition, when running the technological mode, monitoring of pulsed liquid supply is carried out only by monitoring the performance of each electrically-operated hydraulic valve, and not by monitoring of parameters of each jet.
There is known a device for detection of clogging of nozzles spraying water droplets [JPS62174319 A, published on July 31, 1987]. This device is used to cool a steel product during its heat treatment. The known device contains two electrodes placed on the trajectory of water droplets sprayed from the nozzle. The first electrode is connected to the second electrode through a power supply and a resistor. The resistance between the electrodes is measured, and it is determined from the resistance value, whether the nozzles are clogged or not. If the resistance is zero, the nozzle is clogged. If the resistance is of a certain value, there are drops of water between the first and second electrodes, therefore the nozzle is not clogged.

However, this device has low accuracy, because there is determined the presence of water between the electrodes and not between the injector and any electrode. As the closure of the electrical circuit between the electrodes can occur due to the droplet formation on the upper electrode (in the absence of water discharge from the injector), the device can give an erroneous result of the presence of water discharge from the injector also in the case of the absence of water discharge from the injector.

In addition, it is not possible to measure current between the nozzle and the electrode in the known device. As a result, it is impossible to determine the cross section of the jet discharged from the injector. This does not allow detecting a partial clogging of the injector.

### Disclosure of the Invention

A technical objective of the invention is to improve the quality and provide the continuity of monitoring of thermal processing of a product/material, increase the stability of thermal processing, provide monitoring of volume of liquid entering the liquid chamber, as well as uniformity of its distribution over channels of a multi-channel hydraulic system, provide monitoring of time parameters of liquid jets and their cross-sections when passing through hydraulic outlets.

The technical objective is achieved in that the claimed apparatus for monitoring of flow rate and distributional uniformity of liquid in multi-channel hydraulic system, as well as the closest prior art, comprises a liquid chamber with a hydraulic inlet and two or more hydraulic outlets to discharge an electrically conducting liquid, as well as a flow meter installed at the hydraulic inlet of the liquid chamber and connected to a control unit. As opposed to the closest prior art, each hydraulic outlet is fitted with a single measuring electrode disposed in the path of the jet of liquid discharged from the hydraulic outlet, each measuring electrode being connected via a current converter to a control unit and to the first output terminal of a common voltage source, whereby the second output terminal of the common voltage source is connected to the liquid chamber and/or the hydraulic outlets.

In addition, the hydraulic inlet of the liquid chamber may further be fitted with an electrically-operated hydraulic valve.

Then, the hydraulic inlet of the liquid chamber may further be fitted with a dispenser.

Further, as the common voltage source is used an AC bipolar voltage source with a particular frequency, wherein the AC bipolar voltage frequency is selected depending on the used material of the measuring electrode.

Furthermore, between the liquid chamber and a product/material being cooled may additionally be disposed a device with channels for directional distribution of liquid over desired surfaces of a product being processed.

Installing the flow meter at the hydraulic inlet of the liquid chamber allows measuring and monitoring total flow rate of the entire hydraulic system continuously in the course of operation, and thus ensuring the compliance with the technological mode of liquid supply.

Installing a measuring electrode on the path of the jet discharged from the hydraulic outlet, wherein the measuring electrode being connected via the current converter to the control unit and to the first output terminal of the common voltage source, the second output terminal of which is connected to the liquid chamber and/or hydraulic outlets being a common electrode, allows monitoring cross-section and time parameters of the jet of discharged liquid from each hydraulic outlet, whereby monitoring of distributional uniformity of liquid over the channels of the multi-channel hydraulic system is ensured.

Furthermore, installing each measuring electrode on the path of the jet discharged from the hydraulic outlet eliminates barriers which may distort its cross-section, ensuring more accurate monitoring of cross-section of both continuous and pulsed jet, including at relatively short pulses and pauses therebetween.

Embodiment of the power supply source in the form of AC bipolar voltage source with a particular frequency, wherein it is preferred to select frequency depending on used material of measuring electrodes, allows preventing the electrolytic destruction process of measuring electrodes, the result of which is the extension of operating life thereof and consequently augmentation of thermal processing stability.

Introduction of current converters, with the use of which each measuring electrode is connected to the common voltage source, allows measuring voltage characterizing the resistance of a portion of the jet at a distance between two electrodes, and thus, calculating the cross-section of the jet.

### Summary of the Inventioi

The invention is defined by independent claim 1.

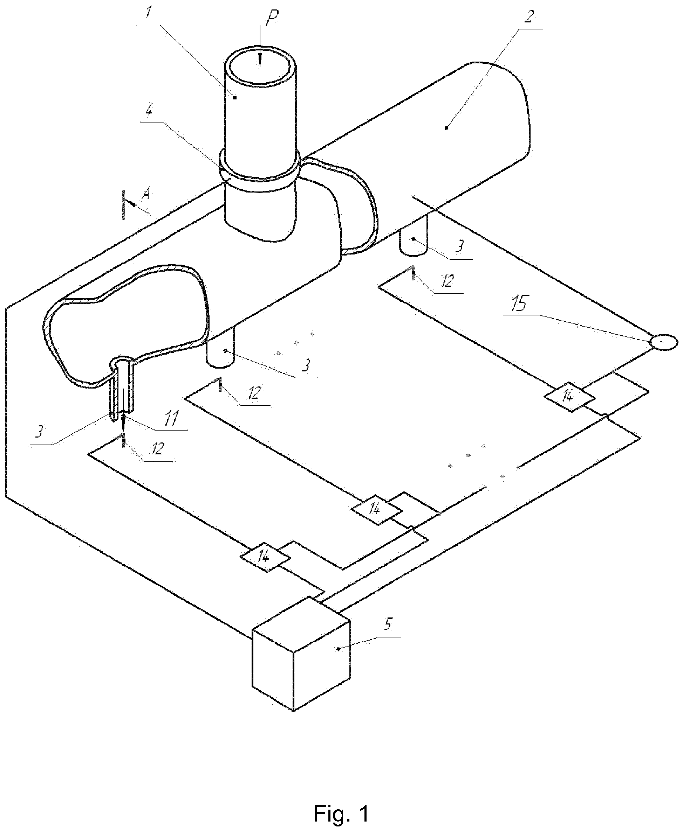

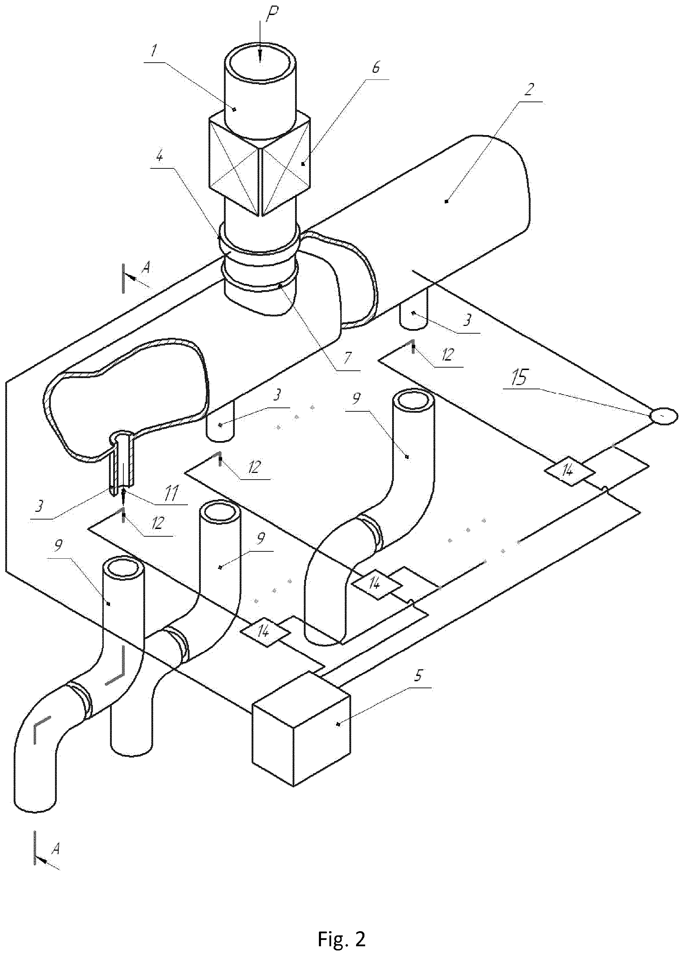

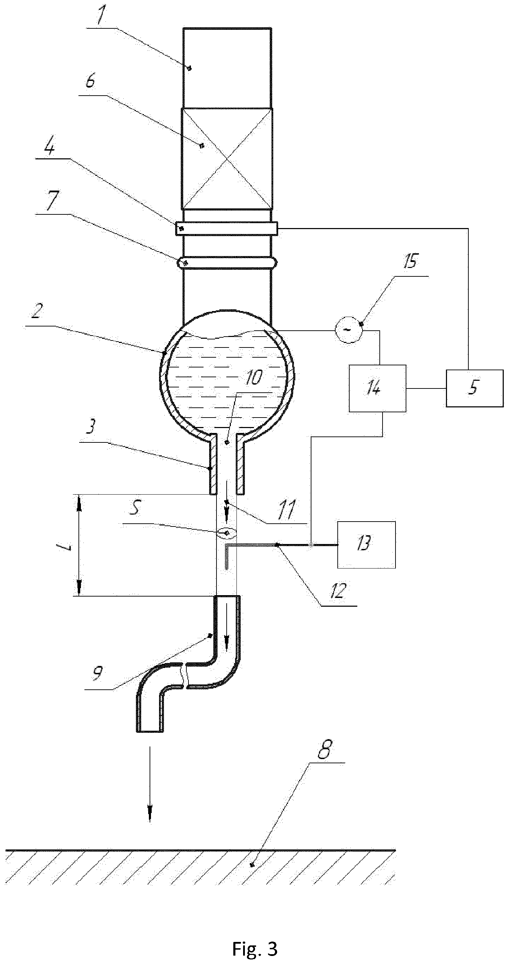

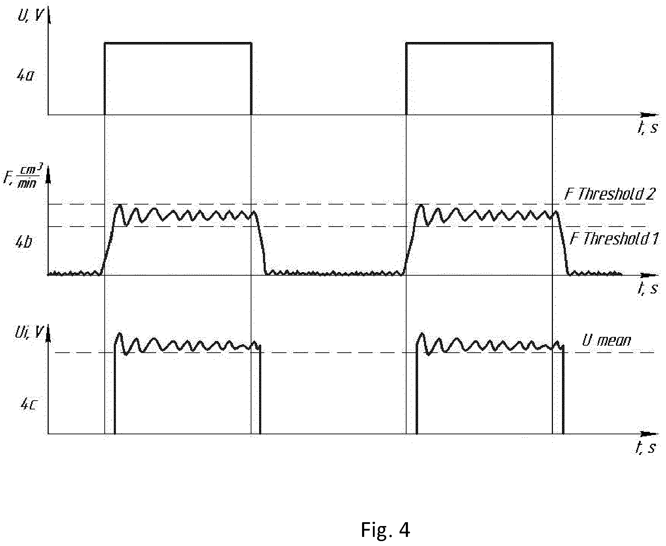

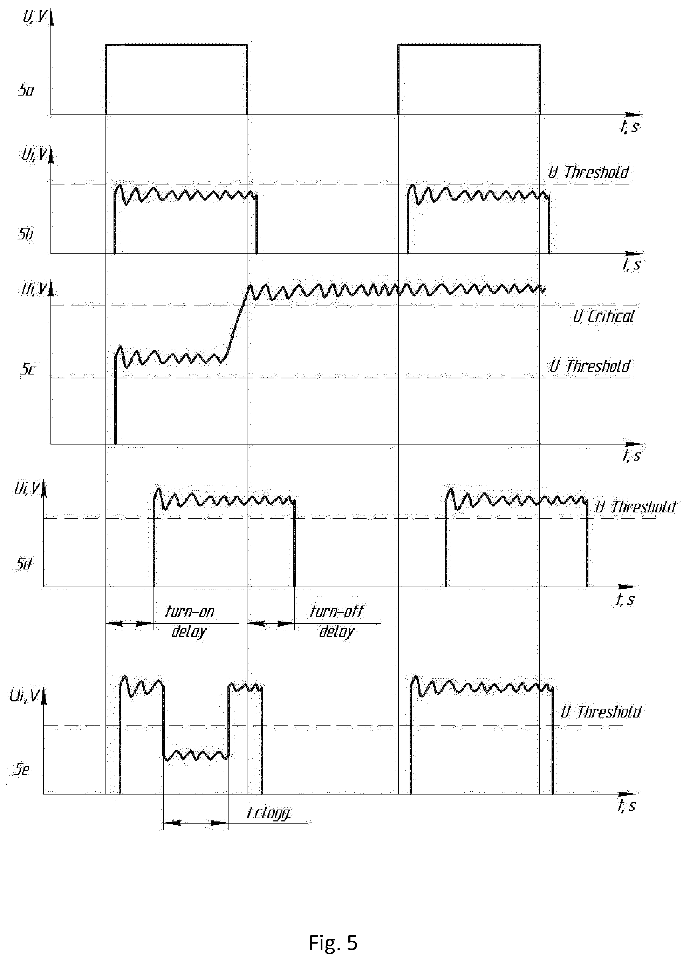

The essence of the invention will be illustrated with the following drawings: Fig. 1 shows an apparatus for monitoring flow rate and distributional uniformity of liquid in multi-channel hydraulic system; Fig. 2 shows an apparatus for monitoring flow rate and distributional uniformity of liquid in multi-channel hydraulic system with additional embodiments; Fig. 3 shows section A-A of Fig. 2; Fig. 4 shows a diagram of time parameters of control signals of an electrically-operated hydraulic valve; signal parameters of a flow meter, and signal parameter of jet discharge from one of the hydraulic outlets in normal operation; Fig. 5 shows a diagram of time parameters of control signals of an electrically-operated hydraulic valve, signal parameters of a flow meter, and signal parameter of jet discharge from one of the hydraulic outlets in the event of potential deviations from normal operation.

The apparatus for monitoring flow rate and distributional uniformity of liquid in multi-channel hydraulic system shown in Fig. 1 comprises the pressure line 1, the liquid chamber 2 with n hydraulic outlets 3 to discharge an electrically conducting liquid, where n ≥ 2. The hydraulic outlets 3 may be in the form of calibrated orifices or nozzles, or injectors, or branch pipes etc.

The flow meter 4 is installed at the hydraulic inlet of the liquid chamber 2 and connected to the control unit 5. In the pressure line 1 may be installed the electrically-operated hydraulic valve 6 and/or the dispenser 7, and between the liquid chamber 2 and a product/material 8 being cooled may be disposed the device (not shown in Fig.) with channels 9 for directed distribution of liquid over desired surfaces of the product being processed (refer to Fig. 2 and 3).

The jet 11 of electrically conducting liquid, preferably water, discharged from the flow section 10 of the hydraulic outlet 3 is directed to the product/material 8 being cooled (refer to Fig. 3). A single measuring electrode 12 is disposed in the path of the jet 11 of a liquid discharged from the each hydraulic outlet 3 and fixed on the dielectric plate 13. The measuring electrode 12 with its free end is oriented to the direction opposed to the hydraulic outlet 3, in other words, in the direction of liquid discharge, which facilitates the movement of the liquid jet 11 in the intended direction. The axis of the hydraulic outlet 3 may have an inclined arrangement relative to gravitational vertical, with the jet 11 being directed downwards up to its horizontal positioning.

The measuring electrode 12 is connected via the current converter 14 to the control unit 5 and also via the current converter 14 to the first output terminal of the common voltage source 15. The second output of the common voltage source 15 is electrically connected with the liquid chamber 2 and/or the hydraulic outlets 3. Alternatively, the liquid chamber 2 may be made from metal, and the hydraulic outlets 3 may be made from dielectric material; the liquid chamber 2 may be made from dielectric material, and the hydraulic outlets 3 may be made from metal; both the liquid chamber 2 and the hydraulic outlets 3 may be made from metal.

For instance, in case that the liquid chamber 2 is made from dielectric material, and the hydraulic outlets 3 are made from metal, the hydraulic outlets 3 electrically connected to the second output terminal of the common voltage source 15 (not shown in Fig. 3) are a common electrode.

An electric circuit comprises common electrode, common voltage source 15, current converter 14 and measuring electrode 12 connected in series. The current converter 14 is configured to convert current pulse sequence in voltage pulse sequence, and may be made, for instance, in the form of a reference resistor connected to an instrumentation amplifier (not shown on a drawing).

### Use of the Invention

The apparatus for monitoring flow rate and distributional uniformity of liquid in multi-channel hydraulic system is configured to operate as follows.

Liquid under the predetermined pressure P (refer to Fig. 1) is supplied in the pressure line 1 through the flow meter 4 to the liquid chamber 2, and further discharged from the hydraulic outlets 3. However, liquid may be supplied into the liquid chamber 2 through the said flow meter 4 and in addition through the electrically-operated hydraulic valve 6 and/or the dispenser 7 (refer to Fig. 2). An amount characterizing the overall liquid flow rate per the specified time period is recorded in the control unit 5. Said flow amount may be obtained by means of measurement based on any physical principle. Liquid flow amount through each hydraulic outlet 3 may be estimated based on measured time parameters of discharge of jets and their cross-sections.

The amount of liquid may be adjusted using the dispenser 7 and/or by means of pressure in the pressure line 1, and/or the electrically-operated hydraulic valve 6 by way of changing the range and frequency of control pulses, where duration of pulses and pauses therebetween may be of any length, for example, less and/or more than one second.

When being discharged, the liquid jet 11 (refer to Fig. 3) closes a section of the electrical circuit between the measuring electrode 12 and the common electrode, and electric current flows through the circuit. During the pause between pulses of liquid discharge, the electric circuit at the section between the measuring electrode 12 and the common electrode is open, and there is no current in the circuit.

The current converter 14 converts current, flowing through the jet 11 at the section between the measuring electrode 12 and the common electrode, into voltage Uᵢ. At a certain conductivity of liquid, the specified voltage value U; characterizes the resistance of a jet portion having cross-section S at a distance between the measuring electrode 12 and the common electrode at a given point of time. The smaller is the cross-section S of the jet, the higher is the resistance of the portion of the liquid jet 11 between the said electrodes, and the lower is the voltage Uᵢ.

These signals comprising Uᵢ for the i-th hydraulic outlet 3 arrive at the control unit 5. After analog-to-digital conversion of Uᵢ input signals, the control unit 5 carries out their processing/filtering at each segment of time.

The control unit 5 compares time parameters of control signals of the electrically-operated hydraulic valves 6 with signal parameters of the flow meter and parameters of jet discharge through the hydraulic outlets 3, whereby it makes decision on compliance with the technological mode of thermal processing.

The control unit 5 compares U; with mean value of Uₘₑₐₙ calculated by well-known methods. If for each hydraulic outlet 3 the following condition is met |**Umean - Ui|** equal or less than the preset acceptable deviation from Uₘₑₐₙ, this means a uniform discharge of liquid by all hydraulic outlets 3. The control unit 5 generates a signal of malfunction of the i-th hydraulic outlet 3, |**Umean - Ui|** of which is more than the preset acceptable deviation from Uₘₑₐₙ.

In addition, the control unit 5 compares U; with U_{Threshold} and U_{Critical}, where U_{Threshold} is a threshold value of Uᵢ corresponding to a minimum acceptable flow rate of liquid through the hydraulic outlet 3, and U_{Critical} is a critical value of Uᵢ, exceedance of which is indicative of constrained discharge from channels 9; and estimates time parameters of jet discharge and their relation to time parameters of the electrically-operated hydraulic valve 6.

Fig. 4 and 5 show examples of diagrams of time parameters of control signals of the electrically-operated hydraulic valve 6, signal parameters of the flow meter 4 and signal parameters of jet discharge through one of hydraulic outlets 3 respectively in normal operation and in the event of potential deviations from normal operation.
4a shows a control signal of the electrically-operated hydraulic valve 6;
4b shows signal parameters of the flow meter 4 at normal supply of liquid through the electrically operated hydraulic valve 6, where F_{Threshold2} is the upper limit of flow rate, F_{Threshold1} is the lower limit of flow rate. In this instance, liquid flow rate is within the preset limits in relation to the amount of preset flow rate and time corresponding to normal actuation of the electrically-operated hydraulic valve 6;
4c shows signal parameters of jet discharge through one of the hydraulic outlets 3 at an acceptable deviation of U; of this hydraulic outlet 3 from the mean voltage value Uₘₑₐₙ, and at normal supply of liquid through the electrically-operated hydraulic valve 6;
5a shows a control signal of the electrically-operated hydraulic valve 6;
5b shows signal parameters of jet discharge through one of the hydraulic outlets 3 in the event of partial clogging of the flow section 10 (U; < U_{Threshold}) and at normal supply of liquid through the electrically-operated hydraulic valve 6;
5c shows signal parameters of jet discharge through one of the hydraulic outlets 3 in the event of constrained discharge from the channels 9 due to their clogging (Uᵢ>U_{critical} during the time period after the first pulse), where U_{critical} is a preset critical voltage value, exceedance of which is indicative of constrained discharge from the channels 9; and normal supply of liquid through the electrically-operated hydraulic valve 6;
5d shows signal parameters of jet discharge through one of the hydraulic outlets 3 in the event of turn-on delay of the electrically-operated hydraulic valve 6 (t turn-on delay), in the event of turn-off delay of the electrically-operated hydraulic valve 6 (t turn-off delay) and normal passability of the hydraulic outlet 3 (U; ≥ U_{Threshold}).
5e shows signal parameters of jet discharge through one of the hydraulic outlets 3 in the event of partial clogging of the flow section 10 (t_{clogg}.) followed by washing-out the clog and at normal supply of liquid through the electrically-operated hydraulic valve 6.

Time parameters of jets at continuous supply of liquid are similar to time parameters of liquid jets at its pulsewise supply with no pauses between pulses.

The distance L, at which the measuring electrode 12 is located relative to the hydraulic outlet 3 (refer to Fig. 3), is selected to exclude closing due to drop formation, as well as to ensure fast measuring of voltage Uᵢ during the said contact.

The AC bipolar voltage source 15 prevents electrolytic process of degradation of the measuring electrode 12, at that the frequency of the AC bipolar voltage source 15 is selected depending on used material of the measuring electrode 12. This additionally contributes to the extension of operating life of the measuring electrode 12 and consequently augmentation of thermal processing stability.

## Claims

1. An apparatus for monitoring flow rate and distributional uniformity of liquid in a multi-channel hydraulic system comprising:
a liquid chamber (2) with a hydraulic inlet and two or more hydraulic outlets (3) for discharge of electrically conducting liquid, as well as a flow meter (4) installed at the hydraulic inlet of the liquid chamber and connected to a control unit (5),
**characterized in that**:
each hydraulic outlet (3) is fitted with a single measuring electrode (12) disposed in a path of a jet of liquid discharged from the hydraulic outlet (3), each measuring electrode (12) being connected via a current converter (14) to the control unit (5) and also via the current converter (14) to the first output terminal of a common voltage source (15), whereby the second output terminal of the common voltage source (15) is connected to the liquid chamber (2) and/or the hydraulic outlets (3).

2. The apparatus of claim 1, **characterized in that** the hydraulic inlet of the liquid chamber (2) further is fitted with an electrically-operated hydraulic valve (6).

3. The apparatus of claim 1, **characterized in that** the hydraulic inlet of the liquid chamber (2) further is fitted with a dispenser (7).

4. The apparatus of claim 1, **characterized in that** an AC bipolar voltage source with a particular frequency is used as the common voltage source (15), wherein the frequency of the AC bipolar voltage source is selected depending on the used material of the measuring electrode (12).

5. The apparatus of claim 1, **characterized in that** it is further fitted with a device with channels (9) being disposed between the liquid chamber (2) and a product/material (8) being cooled.

6. The apparatus of claim 1, **characterized in that** the hydraulic outlets (3) are made from dielectric material, and the liquid chamber (2) is made from metal and electrically connected to the second output terminal of the common voltage source (15).

7. The apparatus of claim 1, **characterized in that** the liquid chamber (2) is made from dielectric material (3), and the hydraulic outlets are made from metal and electrically connected to the second output terminal of the common voltage source (15).

8. The apparatus of claim 1, **characterized in that** both the liquid chamber (2) and the hydraulic outlets (3) are made from metal and electrically connected to the second output terminal of the common voltage source (15).

## Patentansprüche

1. Vorrichtung zur Überwachung der Durchflussrate und Verteilungsuniformität einer Flüssigkeit in einem mehrkanaligen Hydrauliksystem, umfassend: eine Flüssigkeitskammer (2) mit einem hydraulischen Eingang und zwei oder mehr hydraulischen Ausgängen (3) zum Auslassen einer stromleitenden Flüssigkeit, und auch einen Durchflussmesser (4), der an dem hydraulischen Eingang der Flüssigkeitskammer (2) eingestellt und mit einer Steuereinheit (5) verbunden ist,
**dadurch gekennzeichnet, dass** jeder hydraulische Ausgang (3) mit einer einzelnen Messelektrode (12), die in einem Pfad des aus dem hydraulischen Ausgang ausgelassenen Flüssigkeitsstrahls angeordnet ist, ausgestattet ist, wobei jede Messelektrode (12) mittels eines Stromumrichters (14) mit der Steuereinheit (5) und mit dem ersten Ausgang einer gemeinen Spannungsquelle (15) verbunden ist, wobei der zweite Ausgang der gemeinen Spannungsquelle (15) mit der Flüssigkeitskammer (2) und/oder mit den hydraulischen Ausgängen (3) verbunden ist.

2. Vorrichtung nach Anspruch 1, **dadurch gekennzeichnet, dass** der hydraulische Eingang der Flüssigkeitskammer (2) zusätzlich mit einem elektrisch gesteuerten Hydraulikventil (6) ausgestattet ist.

3. Vorrichtung nach Anspruch 1, **dadurch gekennzeichnet, dass** der hydraulische Eingang der Flüssigkeitskammer (2) zusätzlich mit einem Spender (7) ausgestattet ist.

4. Vorrichtung nach Anspruch 1, **dadurch gekennzeichnet, dass** eine bipolare Wechselspannungsquelle von einer bestimmten Frequenz als eine gemeine Spannungsquelle (15) verwendet wird, wobei die Frequenz der bipolaren Wechselspannungsquelle in Abhängigkeit von dem verwendeten Werkstoff der Messelektrode (12) gewählt wird.

5. Vorrichtung nach Anspruch 1, **dadurch gekennzeichnet, dass** sie zusätzlich mit einer Vorrichtung mit Kanälen (9) ausgestattet ist, die zwischen der Flüssigkeitskammer (2) und einem abzukühlenden Erzeugnis/Werkstoff (8) eingestellt ist.

6. Vorrichtung nach Anspruch 1, **dadurch gekennzeichnet, dass** die hydraulischen Ausgänge (3) aus einem dielektrischen Werkstoff gefertigt sind, und die Flüssigkeitskammer (2) aus Metall gefertigt und mit dem zweiten Ausgang der gemeinen Spannungsquelle (15) elektrisch verbunden ist.

7. Vorrichtung nach Anspruch 1, **dadurch gekennzeichnet, dass** die Flüssigkeitskammer (2) aus einem dielektrischen Werkstoff gefertigt ist, und die hydraulischen Ausgänge (3) aus Metall gefertigt und mit dem zweiten Ausgang der gemeinen Spannungsquelle (15) elektrisch verbunden sind.

8. Vorrichtung nach Anspruch 1, **dadurch gekennzeichnet, dass** die Flüssigkeitskammer (2) und die hydraulischen Ausgänge (3) aus Metall gefertigt und mit dem zweiten Ausgang der gemeinen Spannungsquelle (15) elektrisch verbunden sind.

## Revendications

1. Dispositif de commande de débit et d'uniformité de distribution du liquide dans un système hydraulique à canaux multiples, contenant une chambre à liquide (2) avec une arrivée hydraulique et deux ou plus sorties hydrauliques (3) destinées à l'évacuation du liquide conducteur électrique, ainsi qu'un mesureur de débit (4) installé au niveau de l'arrivée hydraulique de la chambre à liquide (2) et connecté au bloc de commande (5), ***caractérisé en ce que*** chaque sortie hydraulique (3) est équipée d'une électrode de mesure (12) disposée sur le circuit du jet de liquide éjecté de la sortie hydraulique, où l'électrode de mesure (12) est connectée via le convertisseur de courant (14) au bloc de commande (5) et à la première sortie de la source commune de tension (15) dont la seconde sortie est connectée à la chambre à liquide (2) et/ou aux sorties hydrauliques (3).

2. Dispositif selon la revendication 1, **caractérisé en ce que** l'arrivée hydraulique de la chambre à liquide (2) est en outre équipée d'une soupape hydraulique à commande électrique (6).

3. Dispositif selon la revendication 1, **caractérisé en ce que** l'arrivée hydraulique de la chambre à liquide (2) est en outre équipée d'un doseur (7).

4. Dispositif selon la revendication 1, **caractérisé en ce qu'**une source de tension alternative bipolaire d'une certaine fréquence est utilisée en tant que source commune de tension (15), où la fréquence de la source de tension alternative bipolaire est choisie en fonction du matériel utilisé pour l'électrode de mesure (12).

5. Dispositif selon la revendication 1, **caractérisé en ce qu'**il est en outre équipé d'un dispositif avec les canaux (9) installé entre la chambre à liquide (2) et l'objet/la substance à refroidir (8).

6. Dispositif selon la revendication 1, **caractérisé en ce que** les sorties hydrauliques (3) sont fabriquées en une matière diélectrique, et la chambre à liquide (2) est fabriquée en métal et raccordée électriquement à la seconde sortie de la source commune de tension (15).

7. Dispositif selon la revendication 1, **caractérisé en ce que** la chambre à liquide (2) est fabriquée en une matière diélectrique, et les sorties hydrauliques (3) sont fabriquées en métal et raccordées électriquement à la seconde sortie de la source commune de tension (15).

8. Dispositif selon la revendication 1, **caractérisé en ce que** la chambre à liquide (2) et les sorties hydrauliques (3) sont fabriquées en métal et raccordées électriquement à la seconde sortie de la source commune de tension (15).
